(19) Europäisches Patentamt / European Patent Office / Office européen des brevets

(11) **EP 3 257 901 B1**

(12) **EUROPEAN PATENT SPECIFICATION**

(45) Date of publication and mention
of the grant of the patent:
**06.05.2020 Bulletin 2020/19**

(21) Application number: **15881614.0**

(22) Date of filing: **03.03.2015**

(51) Int Cl.:
*C09D 4/02* (2006.01)  *C09D 4/06* (2006.01)
*C08J 7/04* (2020.01)  *C09C 3/12* (2006.01)
*C09C 3/08* (2006.01)  *C09C 1/36* (2006.01)
*C09C 1/40* (2006.01)  *C09C 1/04* (2006.01)
*C09C 1/30* (2006.01)  *C08K 3/22* (2006.01)
*C08K 3/34* (2006.01)  *C09D 133/08* (2006.01)
*C09D 7/40* (2018.01)  *C09D 7/61* (2018.01)

(86) International application number:
**PCT/CN2015/073560**

(87) International publication number:
**WO 2016/127452 (18.08.2016 Gazette 2016/33)**

(54) **PREPARATION METHOD AND APPLICATION OF ELECTRON BEAM CURABLE PAINT AND ELECTRON BEAM CURABLE COATING**

VERFAHREN ZUR HERSTELLUNG UND ANWENDUNG VON ELEKTRONENSTRAHLENHÄRTBARER FARBE UND ELEKTRONENSTRAHLENHÄRTBARE BESCHICHTUNG

APPLICATION ET PROCÉDÉ DE PRÉPARATION D'UNE PEINTURE DURCISSABLE PAR UN FAISCEAU D'ÉLECTRONS ET REVÊTEMENT DURCISSABLE PAR UN FAISCEAU D'ÉLECTRONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.02.2015 CN 201510085333**

(43) Date of publication of application:
**20.12.2017 Bulletin 2017/51**

(73) Proprietor: **Guangdong Tianan New Material Co., Ltd**
**Foshan City, Guangdong 528061 (CN)**

(72) Inventors:
• **DENG, Pengyang**
  **Foshan City**
  **Guangdong 528061 (CN)**
• **WU, Qichao**
  **Foshan City**
  **Guangdong 528061 (CN)**
• **FENG, Junxiang**
  **Foshan City**
  **Guangdong 528061 (CN)**
• **LIU, Meihua**
  **Foshan City**
  **Guangdong 528061 (CN)**
• **DONG, Dewen**
  **Foshan City**
  **Guangdong 528061 (CN)**
• **SONG, Daiying**
  **Foshan City**
  **Guangdong 528061 (CN)**
• **CHEN, Huixue**
  **Foshan City**
  **Guangdong 528061 (CN)**
• **YANG, Weidong**
  **Foshan City**
  **Guangdong 528061 (CN)**
• **WANG, Dongyong**
  **Foshan City**
  **Guangdong 528061 (CN)**

(74) Representative: **HGF Limited**
**Delta House**
**50 West Nile Street**
**Glasgow G1 2NP (GB)**

(56) References cited:
**WO-A1-2013/116302     CN-A- 1 421 500**

**(Cont. next page)**

CN-A- 1 709 965        CN-A- 102 408 765                CN-A- 103 756 549        JP-A- S6 344 966
CN-A- 102 775 889      CN-A- 103 009 756

CN-A- 1 709 965        CN-A- 102 408 765                CN-A- 103 756 549        JP-A- S6 344 966
CN-A- 102 775 889      CN-A- 103 009 756

## Description

The present invention relates to the surface coating technical field, and particularly relates to a preparation method and application of an electron beam curable paint and an electron beam curable coating.

## BACKGROUND

Plastics are more widely used in our daily life, from household appliances, indoor and outdoor decorations, to automotive parts, which all need to use plastics. However, plastics have at least two fatal weaknesses: one is poor weather resistance, thus is easy to decompose under light and heat and have a reduced life time, and some even decompose to produce toxic products and gases; the other is that the plastic is relatively soft, making the surface easy to be scratched. In respect to plastic extrusion molding, although certain properties can be improved by adding a photothermal stabilizer, a wear-resistant agent and the like, some other properties will be damaged inevitably, and the amount of raw materials required for bulk modification is large, thus increasing the cost.

Surface coating technology can not only change the appearance of the plastics, but also improve the physical and chemical properties of the surface. The properties of the plastics such as chemical resistance, weather resistance, scratch resistance and antibacterial properties can be significantly improved by adding functional additives. Meanwhile, as the surface coating is very thin, the amount of functional materials used is less, resulting in a small increase in the cost of the product.

Examples of prior art can be found in CN 1 709 965 A (LI, YANQING ET AL.), a method for preparing organic-inorganic nano hybrid composite material; CN 1 421 500 A (SHANGHAI... LTD), a coating material for reflecting film and its production process; JP S63 44966 A (KAMAYA... LTD), a decorative product; CN 103 009 756 A (GUANGDONG... LTD), a composite basement membrane with surface solidifying coating; and CN 102 408 765 A (SHENZHEN...LTD), an ultraviolet ray and electron beam cured heat insulation coating.

The paint of the coating can be obtained by a thermal curing or radiation method. Solvent-based and aqueous paints are generally thermally curable. However, the solvent-based system has a low solid content, which releases a large amount of solvent into the air, causing environmental pollution; and the aqueous system can has an increased solid content, but since water has a high specific heat and thus a slow evaporation rate, a large amount of heat energy is needed to be provided, the curing channel is generally long, and the curing speed is slow. The radiation methods include ultraviolet light and electron beam irradiation. The paint used in the radiation method may have a 100% solid content, being free of organic solvent and VOC, and has a fast curing speed, thus making the method be an emerging paint curing method. Since the curing speed is fast, ultraviolet light curing technology has been applied on a large scale. However, electron beam curing has the following advantages compared to ultraviolet light curing: higher electric energy utilization; a faster curing speed; high energy of the electron beam which is enough to directly open acrylates, generating radicals to initiate a polymerization reaction without need an initiator, which improves the storage stability of the paint and reduces the color and odor brought about by the byproducts resulting from the decomposition of the photoinitiator; strong penetration ability of the electron beam which may be up to several centimeters, while it is only tens of microns in thickness for ultraviolet light.

With the development of nanotechnology, a nanofiller has been widely applied. Since the nanofiller a particle size of less than 100 nanometers, the nanofiller is used as a component of the paint, and the transparency of the paint is not affected by the nanofiller. Moreover, mechanical properties such as wear resistance, weather resistance and chemical properties such as photo-thermal resistance and chemical resistance of the paint have been significantly improved. However, the nanomaterial such as silicon dioxide, titanium dioxide, zinc oxide, and aluminum oxide generally contains a large number of hydroxyl groups on its surface, resulting in a high polarity, and thus has a poor compatibility with organic monomers and prepolymers. Although the nanofiller can be dispersed in the organic monomer and solvent by physical methods such as sand grinding, ball milling and the like, the stability is not very good because the nanoparticles are easily aggregated together to form secondary particles, which have a size much larger than the primary nanoparticles and affect the transparency and glossness of the coating.

## SUMMARY

The technical problem to be solved by the present invention is to provide an electron beam curable paint and an electron beam curable coating. The electron beam curable paint of the present application is used for a coating material such that the coating has a better hardness and weather resistance.

In view of this, the present application provides an electron beam curable paint, comprising:

a dispersion solution of an inorganic nanomaterial                    5~50 parts by weight;

(continued)

| | |
|---|---|
| a dispersion solution of an inorganic ultraviolet nano-absorbent | 1~10 parts by weight; |
| a polyfunctional monomer | 2~30 parts by weight; |
| an acrylate prepolymer | 10~80 parts by weight |

wherein the dispersion solution of an inorganic nanomaterial is prepared by the following steps:

A) mixing a solution of the inorganic nanomaterial with an organic solvent to obtain a mixed solution, adjusting the pH of the mixed solution;

B) reacting the solution obtained in step A), an acrylate monomer with a silane coupling agent to obtain the dispersion solution of the inorganic nanomaterial;

the dispersion solution of an inorganic ultraviolet absorbent is prepared by the following steps:

A) mixing a solution of the inorganic ultraviolet nano-absorbent with an organic solvent to obtain a mixed solution, adjusting pH of the mixed solution;

B) reacting the solution obtained in step A), an acrylate monomer with a silane coupling agent to obtain the dispersion solution of the inorganic ultraviolet nano-absorbent;

the inorganic nanomaterial is one or two of silicon dioxide and aluminum oxide;

the inorganic ultraviolet nano-absorbent is titanium dioxide or zinc oxide.

Preferably, the silane coupling agent is an acrylate-based silane and a haloalkyl silane coupling agent.
Preferably, the silicon dioxide has a particle size of 5~100 nm, and the aluminum oxide has a particle size of 12~100 nm.
Preferably, the content of the dispersion solution of the inorganic nanomaterial is 10~30 parts by weight.
Preferably, the acrylate prepolymer is selected from one or more of aliphatic urethane acrylates, aromatic urethane acrylates, epoxy acrylates, melamine acrylates, polyester acrylates, polyether acrylates, organosilicone acrylates, polybutadiene acrylates, polyacrylate acrylates and acrylate oligomers; and the polyfunctional monomer is a polyfunctional acrylate.
Preferably, the electron beam curable paint further comprises a leveling lubricant, an antifoaming agent, a pigment or a nano antibacterial agent; and the pigment is contained in an amount of 0.1~10 parts by weight.
The present application also provides a preparation method of an electron beam curable coating, comprising the following steps:

mixing 5~50 parts by weight of a dispersion solution of an inorganic nanomaterial, 1~10 parts by weight of a dispersion solution of an inorganic ultraviolet nano-absorbent, 2~30 parts by weight of a polyfunctional monomer and 10~80 parts by weight of an acrylic prepolymer to obtain a paint;

coating the paint on a substrate, followed by electron beam curing to obtain an electron beam curable coating;

wherein the preparation method of the dispersion solution of the inorganic nanomaterial comprises the following steps:

A) mixing a solution of the inorganic nanomaterial with an organic solvent to obtain a mixed solution, adjusting the pH of the mixed solution;

B) reacting the solution obtained in step A), an acrylate monomer with a silane coupling agent to obtain the dispersion solution of the inorganic nanomaterial;

the preparation method of the dispersion solution of the inorganic ultraviolet absorbent comprises the following steps:

A) mixing a solution of the inorganic ultraviolet nano-absorbent with an organic solvent to obtain a mixed solution, adjusting the pH of the mixed solution;

B) reacting the solution obtained in step A), an acrylate monomer with a silane coupling agent to obtain the dispersion solution of the inorganic ultraviolet nano-absorbent;

the inorganic nanomaterial is one or two of silicon dioxide and aluminum oxide;

the inorganic ultraviolet nano-absorbent are titanium dioxide or zinc oxide.

Preferably, an apparatus for the electron beam curing is a low energy electron beam apparatus. The dose of the electron beam curing is 5~100 kGy, and the speed of the electron beam curing is 100~1000 m/min.
Preferably, the electron beam curable coating has a thickness of 10~100 μm.
The present application also provides use of the electron beam curable paint as described in the above solutions or the electron beam curable coating prepared by the above solutions in automotive interiors or decorative boards.
The present application provides an electron beam curable paint comprising a dispersion solution of an inorganic nanomaterial, a dispersion solution of an inorganic ultraviolet nano-absorbent, a polyfunctional monomer and an acrylate prepolymer, wherein the dispersion solution of the inorganic nanomaterial is selected from one or two of a dispersion solution of silicon dioxide and a dispersion solution of aluminum oxide, and the dispersion solution of the inorganic ultraviolet nano-absorbent is selected from a dispersion of titanium dioxide or a dispersion of zinc oxide. Moreover, silicon dioxide, aluminum oxide, titanium dioxide and zinc oxide are surface modified in the present application such that they can be uniformly dispersed in an acrylate without agglomeration, which is beneficial to improve the properties of the electron beam curable paint. In the present application, the electron beam curable paint is allowed to have a better hardness and weather resistance as a coating by adding the dispersion solution of the inorganic nanomaterial and the dispersion solution of the inorganic ultraviolet nano-absorbent.

## DETAILED DESCRIPTION OF EMBODIMENTS

In order to further understand the present invention, preferred embodiments of the present invention will be described below in combination with examples. However, it should be understood that these descriptions are provided only for further illustrating the features and advantages of the present invention and do not limit the claims of the present invention.
An embodiment of the present invention discloses an electron beam curable coating, comprising:

| | |
|---|---|
| a dispersion solution of an inorganic nanomaterial | 5~50 parts by weight; |
| a dispersion solution of an inorganic ultraviolet nano-absorbent | 1~10 parts by weight; |
| a polyfunctional monomer | 2~30 parts by weight; |
| an acrylate prepolymer | 20~50 parts by weight |

wherein the dispersion solution of the inorganic nanomaterial is prepared by the following steps:

A) mixing a solution of the inorganic nanomaterial with an organic solvent to obtain a mixed solution, adjusting the pH of the mixed solution;

B) reacting the solution obtained in step A), an acrylate monomer with a silane coupling agent to obtain the dispersion solution of the inorganic nanomaterial;
the dispersion solution of the inorganic ultraviolet absorbent is prepared by the following steps:

A) mixing a solution of the inorganic ultraviolet nano-absorbent with an organic solvent to obtain a mixed solution, adjusting pH of the mixed solution;

B) reacting the solution obtained in step A), an acrylate monomer with a silane coupling agent to obtain the dispersion solution of the inorganic ultraviolet nano-absorbent;

the inorganic nanomaterial is one or two of silicon dioxide and aluminum oxide;

the inorganic ultraviolet nano-absorbent is titanium dioxide or zinc oxide.

The present application provides an electron beam curable paint comprising a dispersion solution of an inorganic nanomaterial, a dispersion solution of an inorganic ultraviolet absorbent, a polyfunctional monomer and an acrylate prepolymer. The inorganic nanomaterial and the inorganic ultraviolet absorbent are respectively uniformly dispersed in the acrylate monomer without agglomeration, thus avoiding the influence on the properties of the coating and enabling the coating to have a better wear resistance and weather resistance.

In the electron beam curable paint, the dispersion solution of the inorganic nanomaterial is one or two of a dispersion solution of silicon dioxide and a dispersion solution of aluminum oxide. The addition of a dispersion solution of silicon dioxide to the electron beam curable paint described in this application allows the electron beam curable paint as a material for an electron beam curable coating to give the coating a better hardness; the addition of a dispersion solution of aluminum oxide also enables the coating to have a higher hardness. The addition of both the dispersion solution of silicon dioxide and the dispersion solution of aluminum oxide to the electron beam curable paint enables the coating to have a higher hardness and have a better wear resistance. The silicon dioxide and aluminum oxide contain a large number of hydroxyl groups on their surface, resulting in a high polarity, and thus have a poor compatibility with organic monomers and prepolymers. Therefore, it is necessary to disperse silicon dioxide and aluminum oxide in the organic monomer and solvent, respectively. However, the nanoparticles of silicon dioxide and aluminum oxide are easily aggregated together to form secondary particles, thus affecting the properties of the coating. In order to improve the properties of the electron beam curable coating, the present application provides a preparation method of an inorganic nanomaterial, and the inorganic nanomaterial is one or two of silicon dioxide and aluminum oxide. The preparation method of inorganic nanomaterial comprises the following steps:

A) mixing a solution of the inorganic nanomaterial with an organic solvent to obtain a mixed solution, adjusting the pH of the mixed solution;

B) reacting the solution obtained in step A), an acrylate monomer with a silane coupling agent to obtain a dispersion solution of the inorganic nanomaterial;
wherein during the preparation of the inorganic nanomaterial, silicon dioxide and aluminum oxide are subjected to surface treatment in the present application, such that they can be uniformly dispersed in an organic monomer to form a stable transparent or semi-transparent dispersion solution. Therefore, the dispersion solution of silicon dioxide or aluminum oxide as a component of the electron beam curable paint allows it to have better properties.

The inorganic nanomaterial of the present application is silicon dioxide and aluminum oxide. The solution of the inorganic nanomaterial is first mixed with an organic solvent to obtain a mixed solution. The solution of the inorganic nanomaterial is preferably a hydrosol of an inorganic nanomaterial dispersed in water, such as silica gel and aluminum sol. Nano-silicon dioxide particles are easily dispersed in water to form a stable dispersion solution due to electrostatic repulsion. The hydrosol of silicon dioxide, namely silica gel, has been currently used as a very economical green material. The size of the silica gel is mainly 5 nm, 7 nm, 12 nm, 20 nm and 50 nm, and the pH thereof is preferably 2~12. Some commercially available silica gels are as follows: Ludox (DuPont Company), NexSil (NYACOL Technologies, Inc.), CAB-O-SPERSE (CABOT Corporation), Bindzil and Levasil (AkzoNobel), AERODISP (EVONIK Industries), HTSi-11L (Nanjing Haitai Nano Co., Ltd.), VK-S series (Hangzhou Wanjing New Material Co., Ltd.), but not limited to these.

The aluminum sol may be a dispersion solution of aluminum oxide, or may be aluminum oxide-modified silica gel, such as aluminum sol (Shandong Shanda Colloid Material Co., Ltd.), XZ-1128 (Hefei Xiangzheng Chemical Technology Co., Ltd.) A-10 (Dalian Sinuo Chemical New Materials Science and Technology Co., Ltd.), VK-L30W (Hangzhou Wanjing New Material Co., Ltd.), Al-2255 from NanoPhase Company, and the like.

Due to the small particle and the large surface area, the nano-silicon dioxide contains a large number of hydroxyl groups on its surface, with a hydroxyl density of about $4.6/nm^2$. The silicon hydroxyl can lose hydrogen ions at a pH of 2 or more and produce silicon oxygen anions, and thus, it is easy to obtain a stable dispersion solution in water. However, in an organic solvent or monomer, due to the strong hydrogen bond between hydroxyl groups, silicon dioxide particles are easily agglomerated together to form a large aggregate which precipitates out, and cannot form a stable dispersion solution. Thus, in the present application, a silane coupling agent is used to treat the surface of silicon dioxide, reduce the concentration of hydroxyl group, and reduce the polarity, so as to increase the affinity with the organic solvent and monomer.

However, most of the silane coupling agents have a very low solubility in water except for a very few are soluble in water. Thus, it is necessary to add a water-soluble solvent to increase the solubility of silane in an aqueous silica sol solution. The organic solvent includes one or more of low boiling alcohols, ethers and ketones, wherein the alcohols are one or more of methanol, ethanol, isopropanol and butanol; the ethers are one or more of tetrahydrofuran, 1,4-dioxane, ethylene glycol monomethyl ether, ethylene glycol monoethyl ether, ethylene glycol monopropyl ether, ethylene glycol monobutyl ether, propylene glycol monomethyl ether, propylene glycol monoethyl ether, propylene glycol monopropyl ether and propylene glycol monobutyl ether; and the ketones are one or two of acetone and butanone. Other solvents also include acetonitrile and dimethyl formamide and the like. The above organic solvent is preferably added in an amount of 50%~500%, more preferably 50%~300% by weight of the silica gel.

The reaction of silane is greatly affected by pH and temperature. Under an acidic condition, it is easy to be hydrolyzed to produce silicon hydroxyl groups; under an alkaline condition, a condensation reaction easily occurs; and under a neutral condition, both the hydrolysis and condensation reaction are slow. Increase of the temperature contributes to the hydrolysis and condensation reaction. Accordingly, the pH of the above mixed solution is adjusted in the present application. The pH may be adjusted with an acid such as one or more of formic acid, acetic acid, hydrochloric acid and nitric acid, or a base such as one or more of ammonium hydroxide, sodium hydroxide and potassium hydroxide, and the pH is preferably 2 to 6.

The solution after adjusting pH is then reacted with an acrylate monomer and a silane coupling agent in the present application. The surface reaction of the silane coupling agent after hydrolysis with the inorganic nanoparticles silicon dioxide increases the oil solubility of silicon dioxide, which is then dissolved in the acrylate monomer to obtain a dispersion solution of an inorganic nanomaterial. The reaction temperature is preferably 30°C~100°C, more preferably 50°C~80°C, and the reaction duration is preferably 1 h~24 h, more preferably 2 h~12 h, and most preferably 2 h~6 h.

The silane coupling agent in the present application preferably contains a group which can generate radicals by electron beam irradiation or a group which causes radical crosslinking, and the above group includes (methyl)acrylates, (methyl)acrylamide, vinyl, amino, epoxy, mercapto or haloalkyl. The silane coupling agent in the present application is preferably a silane coupling agent containing a haloalkyl group. The mass ratio of the silane coupling agent to silicon dioxide is preferably 1:100~10:1, more preferably 5:100~5:1, and most preferably 1:10~1:1. The amount of the silane coupling agent used is associated with the particle size or specific surface area of silicon dioxide, the smaller the particles being, the larger the amount of the silane coupling agent being required, and vice versa. The amount of the acrylate monomer used is 0.5~10 times, preferably 1~8 times, more preferably 2~5 times of the weight of silicon dioxide by weight.

The silane coupling agent which may involve in the crosslinking reaction contains a (methyl)acrylate group, a (methyl)acrylamide group, a vinyl group, an amino group and an epoxy group.

The silane containing a (methyl)acrylate group may be represented by a structural formula $CH_2=CR^1-CO-O-R^2SiR^3_m(OR^4)_{3-m}$, wherein m is 0~2, $R^1$ is H or $CH_3$, $R^2$ is an alkyl group containing 1~5 carbon chains, $R^3$ and $R^4$ are alkanes containing 1~3 carbon chains, and $R^3$ and $R^4$ may be the same or different. The silane containing a (methyl)acrylate group is preferably one or more of γ-(methyl)acryloyloxypropyltrimethoxysilane, γ-(methyl)acryloyloxypropyl -triethoxysilane, γ-(methyl)acryloyloxypropyltriisopropoxysilane, γ-(methyl)acryloyloxypropylmethyldimethoxysilane, γ-(methyl)acryloyloxypropyl -methyldiethoxysilane, γ-(methyl)acryloyloxypropyldimethylmethoxysilane and γ-(methyl)acryloyloxypropyldimethylethoxysilane.

The silane containing an acrylamide group may be represented by a structural formula $CH_2=CR^5-CO-NH-R^6SiR^7_n(OR^8)_{3-n}$, wherein n is 0~2, $R^5$ is H or $CH_3$, $R^6$ is an alkyl group containing 1~5 carbon chains, $R^7$ and $R^8$ are alkanes containing 1~3 carbon chains, $R^7$ and $R^8$ may be the same or different. Such a silane is preferably one or more of (methyl)acrylamidopropyltrimethoxysilane, (methyl)acrylamido-propyltriethoxysilane, (methyl)acrylamidopropyltriisopropoxysilane, (methyl)acryl-amidopropylmethyldimethoxysilane, (methyl)acrylamidopropylmethyldiethoxysilane, (methyl)acrylamidepropyldimethylmethoxysilane, (methyl)acrylamidopropyldimethy-lethoxysilane, (methyl)acrylamido(2-methyl)propyltrimethoxysilane, (methyl)acrylamido(2-methyl)ethyltrimethoxysilane, (methyl)acrylamido(2-methyl)propyltriethox-ysilane, (methyl)acrylamido(2-methyl)ethyltriethoxysilane, N-[2-(methyl)acrylami-doethyl]aminepropyltrimethoxysilane,N-[2-(methyl)acrylamidoethyl]aminepropyltri-ethoxysilane, 3-(methyl)acrylamidopropyltriacetoxysilane, (methyl)acrylamidoethyl-trimethoxysilane, (methyl)acrylamidoethyltriethoxysilane, (methyl)acrylamidometh-yltrimethoxysilane and (methyl)acrylamidomethyltriethoxysilane.

The silica containing vinyl is preferably one or more of vinyltrimethoxysilane, vinyltriethoxysilane, vinyltriisopropoxysilane, vinyltritertbutoxysilane, vinyltri-(β-methoxyethoxy)silane, vinylmethyldimethoxysilane, vinylmethyldiethoxysilane, vinyldimethylmethoxysilane, vinyldimethylethoxysilane, vinyltriacetoxysilane, divinyltetramethyldisiloxane and tetravinyltetramethylcyclotetrapolysiloxane.

The silica containing an epoxy group is preferably one or more of 3-(2,3-epoxy- propoxy)propyltrimethoxysilane, 3-(2,3-epoxypropoxy)propyltriethoxysilane, 3-(2,3-epoxypropoxy)propyltriisopropoxysilane, 3-(2,3-epoxypropoxy)propylmethyldimeth-oxysilane,3-(2,3-epoxypropoxy)propylmethyldiethoxysilane, 3-(2,3-epoxypropoxy)-propyldimethylmethoxysilane, 3-(2,3-epoxypropoxy)propyldimethylmonoxysilane, 2-(3,4-epoxycyclohexyl)ethyltrimethoxysilane and 2-(3,4-epoxycyclohexyl)ethyltriethoxysilane.

The silica containing an amino group is preferably one or more of γ-aminopropyltrimethoxysilane, γ-aminopropyltriethoxysilane, γ-aminopropylmethyldimethoxysilane, γ-aminopropylmethyldiethoxysilane, γ-aminopropyldimethylmethoxysil-ane, γ-aminopropyldimethylethoxysilane, N-methyl-γ-aminopropyltrimethoxysilane, N-methyl-γ-aminopropyltriethoxysilane, N-anilinepropyltrimethoxysilane, N-aniline-propyltriethoxysilane, N-β-(aminoethyl)-γ-aminopropyltrimethoxysilane, N-(β-amin oethyl)-γ-aminopropyltriethoxysilane, N-(β-(aminoethyl)-γ-aminopropylmethyldimethoxysilane and N-β-(aminoethyl)-γ-aminopropylmethyldiethoxysilane.

The silane which is prone to generate radicals under electron beam, may be represented by a structural formula

$XR^9SiR^{11}{}_p(OR^{12})_{3-p}$, wherein p is 0 to 2, $R^9$ is an alkyl group containing 1~5 carbon chains, $R^{11}$ and $R^{12}$ are alkanes containing 1~3 carbon chains, which may be the same or different, and X is Cl, Br, I or SH and the like. Such a silane is preferably one or more of 3-mercaptopropyltrimethoxysilane, 3 -mercaptopropyltriethoxysilane, 3-mercaptopropylmethyldimethoxysilane, 3-merca-ptopropylmethyldiethoxysilane, 3-mercaptopropyldimethylmethoxysilane, 3-merca-ptopropyldimethylethoxysilane, 3 -chloropropyltrimethoxysilane, 3 -chloropropyltriethoxysilane, 3-chloropropylmethyldimethoxysilane, 3-chloropropylmethyldiethoxysilane, 3-chloropropyldimethylmethoxysilane, 3-chloropropyldimethylethoxysilane, 3 -bromopropyltrimethoxysilane, 3 -bromopropyltriethoxysilane, 3-bromopropylmethyldimethoxysilane, 3-bromopropylmethyldiethoxysilane, 3-bromopropyldimethylmethoxysilane, 3-bromopropyldimethylethoxysilane, 3 -iodopropyltrimethoxysilane, 3 -iodopropyltriethoxysilane, 3-iodopropylmethyldimethoxysilane, 3-iodopropylmethyldiethoxysilane, 3-iodopropyldimethylmethoxysilane and 3-iodopropyldimethylethoxysilane.

In the present application, it is preferred to use a halogen-containing silane coupling agent to modify silicon dioxide, which generates radicals at low electron beam radiation energy, so as to cure the coating quickly.

The acrylate monomer in the present application may be a monofunctional monomer, a bifunctional monomer, a multifunctional monomer, and is not particularly limited in the present application. The monofunctional monomer is preferably one or more of hydroxyethyl acrylate, hydroxypropyl acrylate, isooctyl acrylate, dodecyl acrylate, tetradecyl acrylate, octadecyl acrylate, isobornyl acrylate, caprolactone acrylate, 2-methoxyethyl acrylate, 2-butoxyethyl acrylate, 2-dimethylaminoethyl acrylate, 2-diisopropylaminoethyl acrylate, methacrylate phosphate, ethoxy ethoxyethyl acrylate, tetrahydrofuran methanolic acrylate, phenoxyethyl acrylate, hexanediol methoxy monoacrylate, ethoxylated neopentyl glycol methoxy monoacrylate, polyethylene glycol methoxy monoacrylate (with various different molecular weights), 2,3-epoxypropyl acrylate, 2,2,2-trifluoroethyl methacrylate and 1,1,1,3,3,3-hexafluoroisopropyl methacrylate.

The bifunctional acrylate monomer is preferably one or more of 1,3-propanediol diacrylate, 1,4-butanediol diacrylate, 1,6-hexanediol diacrylate, ethylene glycol diacrylate, diethylene glycol diacrylate, triethylene glycol diacrylate, polyethylene glycol diacrylate (with various different molecular weights), dipropylene glycol diacrylate, tripropylene glycol diacrylate, neopentyl glycol diacrylate, ethoxyl neopentyl glycol diacrylate, propoxy neopentyl glycol diacrylate, cyclohexanedimethanol diacrylate, ethoxylated bisphenol A diacrylate, zinc diacrylate and diethanol diacrylate phthalate.

The polyfunctional acrylate monomer is preferably one or more of trimethylolpropane triacrylate, ethoxylated trimethylolpropane triacrylate, propoxylated trimethylolpropane triacrylate, glycerol triacrylates, ethoxylated glycerol triacrylates, propoxylated glycerol triacrylates, ditrimethylolpropane tetraacrylate, ethoxylated pentaerythritol triacrylate, ethoxylated pentaerythritol triacrylate, propoxylated pentaerythritol triacrylate, tri-2-hydroxyethyl isocyanurate triacrylate, pentaerythritol tetraacrylate, ethoxylated pentaerythritol tetraacrylate, propoxylated pentaerythritol tetraacrylate and dipentaerythritol monohydroxy pentaacrylate.

Methacrylate compounds of the above monomers are also applicable.

The present invention also provides a preparation method of the dispersion solution of aluminum oxide, of which the preparation process and the raw materials used are the same as those of silicon dioxide, and will not be described further herein.

The present application also provides a preparation method of the dispersion solution of an ultraviolet absorbent, i.e., the dispersion solution of titanium dioxide and the dispersion solution of zinc oxide. In the present application, nano titanium dioxide or zinc oxide is dispersed in an organic monomer, respectively, to form a stable transparent or semi-transparent dispersion solution. Nano titanium dioxide and zinc oxide are good inorganic ultraviolet absorbents that are transparent to visible light, but they have photocatalytic properties and are easy to decompose organic matters. In the present application, titanium dioxide and zinc oxide are treated with a silane coupling agent, which on one hand, increases their compatibility with the monomer, and on the other hand can coat the surface of nano titanium dioxide and zinc oxide particles with an inorganic silicon dioxide layer, thus reducing their photocatalytic properties.

According to the present invention, the raw material of the dispersion solution of the inorganic ultraviolet absorbent titanium dioxide and zinc oxide is a solution of titanium dioxide and zinc oxide, which may be a solution of titanium oxide and zinc oxide in an organic solvent such as alcohols, or may be aqueous. An aqueous solution of titanium dioxide and an aqueous solution of zinc oxide are preferred in the present application. The preparation process of the dispersion solution of titanium dioxide and the dispersion solution of zinc oxide in the present application is the same as the preparation method of the dispersion solution of the inorganic nanomaterial, and will not be described further herein.

The dispersion solution of the inorganic nanomaterial and the dispersion solution of the inorganic ultraviolet absorbent are used as components of the electron beam curable paint after their preparation in the present application.

The electron beam curable paint provided in the present application comprises a dispersion solution of an inorganic nanomaterial, a dispersion solution of an inorganic ultraviolet absorbent, a polyfunctional monomer and an acrylate prepolymer. In the above components, the inorganic nanomaterial and the inorganic ultraviolet absorbent have a poor miscibility with the polyfunctional monomer and the acrylate prepolymer, and therefore, it is necessary to modify them with a silane coupling agent to increase the affinity therebetween. The inorganic nanomaterial and the inorganic ultraviolet absorbent themselves have a poor film forming property or cannot completely form a film, and therefore, it is necessary to use a polyfunctional monomer and an acrylic prepolymer as base materials for film formation. Therefore, the components in the electron beam curable paint of the present application are complementary and synergistic to each other.

The inorganic nanomaterial silicon dioxide as an electron beam curable paint can increase the hardness of the coating, but the amount required is large. If a small amount of aluminum oxide is added, the wear resistance of the coating can be significantly improved while improving the hardness. However, silicon dioxide and aluminum oxide cannot improve the weather resistance of the coating. The addition of a small amount of titanium dioxide or zinc oxide can selectively absorb and filter out the ultraviolet light that is harmful to the coating in sunlight and increases the weather resistance of the coating. However, the use of titanium dioxide and zinc oxide alone cannot improve the hardness and the wear resistance of the coating. Accordingly, in the present application, the inorganic nanomaterial is selected from one or two of silicon dioxide and aluminum oxide, and the inorganic ultraviolet absorbent is selected from titanium dioxide or zinc oxide, such that the coating formed by the electron beam curable paint has a better hardness and weather resistance. As a preferred embodiment, in the present application, it is preferred to select three inorganic materials from silicon dioxide, aluminum oxide, titanium dioxide and zinc oxide as the components of the electron beam curable paint. In the examples, the electron beam curable paint has the best property in the case that: the electron beam curable paint comprises one of a dispersion solution of silicon dioxide, a dispersion solution of aluminum oxide and a dispersion solution of titanium dioxide and a dispersion solution of zinc oxide, thus enabling the coating to have a better hardness, wear resistance and weather resistance at the same time.

The acrylate prepolymer plays a very important role in the entire coating, and the selection of an appropriate prepolymer can improve the toughness, wear resistance and weather resistance of the coating. The acrylate prepolymer contains a plurality of (methyl)acrylate functional groups, mainly including one or more of aliphatic and aromatic urethane acrylates, epoxy acrylates, melamine acrylates, polyester acrylates, polyether acrylates, organosilicone acrylates, polybutadiene acrylates, polyacrylate acrylates and acrylate oligomers, wherein the aliphatic urethane acrylates, polyether acrylates and polyacrylate acrylates are preferred, because they do not contain aromatic groups and have a better weather resistance. The acrylate prepolymer preferably contains three or more functional groups to increase the crosslink density after curing. The aliphatic urethane acrylates include EBECRYL such as 264, 4866, 821, 8301, 8402, 8411 and the like from Cytec Company; CN9006 NS, CN9010 NS, CN9013 NS, CN9110 NS, CN970A60 NS, CN971A80 NS, CN975 NS, CN989 NS and the like from Sartomer Company; BR-144, BR-302, BR-582E8, BR-582H15, BRC-443, BRC-841, BRC-843, BRC-970BT, BRC-990 and the like from Dymax Oligomers & Coatings Company; 6103, 6130B-80, 6134B-80, 6145-100, 6150-100, 6158B-80, 6170, 6195-100, 6196-100, 6197, 5105A, DR-U011, DR-U012, DR-U024, DR-U052, DR-U053, DR-U095, DR-U110, DR-U129, DR-U591 and the like from Changqing Company.

The acrylate prepolymers have different molecular weights and viscosities, and the overall viscosity thereof should not be too large to affect the coating when forming a formulation. The molecular weight of the acrylate prepolymer is preferably 1,000~10,000, more preferably 1,000~5,000, and most preferably 1,000~3,000. The content of the acrylate prepolymer is preferably 10 parts by weight to 80 parts by weight, more preferably 10 parts by weight to 60 parts by weight, and most preferably 20 parts by weight to 50 parts by weight.

The polyfunctional monomer in the present application is preferably one or more of the above polyfunctional acrylates, and the content of the polyfunctional monomer is 2~30 parts by weight, preferably 5~20 parts by weight. The electron beam curable paint in the present application also comprises other aids such as leveling agents, antifoaming agents and pigments, etc., which can be added to the formulation to solve the problems during the coating process, such as to increase wettability to the surface, reduce generation of bubbles, increase decorativeness and so on. The leveling wetting agent includes BYK-UV 3500, BYK-UV 3535, BYK-377 from BYK Company; TEGO®RAD 2010, TEGO® RAD 2011, TEGO® RAD 2100, TEGO® RAD 2250, TEGO® RAD 2300, TEGO® RAD 2500, TEGO® RAD 2600, TEGO® RAD 2700, TEGO® Wet 270 from EVONIK INDUSTRIES; Dow Corning 28, 57, 67, 730, 930, 8211, XIAMETER OFX series from Dow Corning Company. The antifoaming agent includes BYK-067A, BYK-088, BYK-1790, BYK-1791, BYK-A 535 from BYK Company; TEGO® Airex 900, TEGO® Airex 920, TEGO® Airex 950, TEGO® Airex 962, TEGO® Airex 990 from EVONIK INDUSTRIES; Silok 4010, 4012, 4020, 4050, 4070, 4500, 4920 and the like from Guangzhou Sinuoke Chemical Co., Ltd.; 54, 710, 810, 910, 1500 and the like from Dow Corning Company.

A pigment can be added to the electron beam curable paint to change the color of the coating, thereby increasing its decorative properties without affecting its curing properties. The pigment is preferably 0.1 parts by weight to 10 parts by weight, more preferably 0.2 parts by weight to 5 parts by weight, and most preferably 1 parts by weight to 3 parts by weight. The pigment includes carbon black, cobalt blue, iron oxide red, iron oxide yellow, nickel titanium yellow and organic pigments and the like.

The present application provides an electron beam curable paint comprising a dispersion solution of an inorganic nanomaterial, a dispersion solution of an inorganic ultraviolet nano-absorbent, a polyfunctional monomer and an acrylate prepolymer, wherein the dispersion solution of the inorganic nanomaterial is selected from one or two of a dispersion solution of silicon dioxide or a dispersion solution of aluminum oxide, and the dispersion solution of the inorganic ultraviolet nano-absorbent is selected from a dispersion of titanium dioxide or a dispersion of zinc oxide. Moreover, silicon dioxide, aluminum oxide, titanium dioxide and zinc oxide are surface modified in the present application such that they can be uniformly dispersed in an acrylate without agglomeration, which is beneficial to improve the properties of the electron beam curable paint. In the present application, the electron beam curable paint is allowed to have a better hardness and weather resistance as a coating by adding the dispersion solution of the inorganic nanomaterial and the dispersion solution of the inorganic ultraviolet nano-absorbent.

The present application also provides a preparation method of a protective coating, comprising the following steps:

mixing 5~50 parts by weight of a dispersion of an inorganic nanomaterial, 1~10 parts by weight of a dispersion of an inorganic ultraviolet nano-absorbent, 5~20 parts by weight of a polyfunctional monomer and 10~80 parts by weight of an acrylic prepolymer to obtain a paint;

coating the paint on a substrate, followed by electron beam curing to obtain an electron beam curable coating;

wherein a preparation method of the dispersion solution of the inorganic nanomaterial comprises the following steps:

A) mixing a solution of the inorganic nanomaterial with an organic solvent to obtain a mixed solution, adjusting the pH of the mixed solution;

B) reacting the solution obtained in step A), an acrylate monomer with a silane coupling agent to obtain the dispersion solution of the inorganic nanomaterial;

a preparation method of the dispersion solution of the inorganic ultraviolet absorbent comprises the following steps:

A) mixing a solution of the inorganic ultraviolet nano-absorbent with an organic solvent to obtain a mixed solution, adjusting the pH of the mixed solution;

B) reacting the solution obtained in step A), an acrylate monomer with a silane coupling agent to obtain the dispersion solution of the inorganic ultraviolet nano-absorbent;

the inorganic nanomaterial is one or two of silicon dioxide and aluminum oxide;

the inorganic ultraviolet nano-absorbent is titanium dioxide or zinc oxide.

The present application also provides a preparation method of the protective coating. In the present application, during the preparation of the protective coating, the dispersion solution of the inorganic nanomaterial, the dispersion solution of the inorganic ultraviolet nano-absorbent, the polyfunctional monomer and the acrylic prepolymer are mixed first to obtain a paint, and the paint is coated on a substrate, and then subjected to electron beam curing to obtain an electron beam curable coating.

During the above preparation of the coating, the preparation processes of the dispersion solution of the inorganic nanomaterial and the dispersion solution of the inorganic ultraviolet absorbent are as described above and will not be described further herein.

The above coating methods are well known to those skilled in the art, such as brush coating, roller coating, spraying coating and curtain coating and the like, and are not particularly limited in the present application. The paint is irradiated with an electron beam to obtain a cured film. An apparatus used for electron beam curing is capable of emitting a high energy, medium or low energy electron beam, preferably a low energy electron beam, and the acceleration voltage is preferably 50~250 kV. The irradiation chamber is protected with an inert gas such as nitrogen or argon such that the concentration of oxygen is less than 500 mg/L, preferably less than 300 mg/L. The curing dose is preferably 5~100 kGy, more preferably 10~80 kGy, and most preferably 10~50 kGy, and the curing speed is preferably 100~1000 m/min, more preferably 300~1000 m/min, and most preferably 500~1000 m/min.

The thickness of the obtained electron beam curable film is preferably 1 $\mu$m~2 mm, more preferably 10 $\mu$m~1 mm, and most preferably 10 $\mu$m~100 $\mu$m.

The present invention also provides use of the electron beam curable coating in automotive interiors or decorative boards.

The decorative boards may be plastic, and the plastic may be a pure polymer material or may be blended with an inorganic filler, may be a thin film, or may be a board. These plastic materials include polyolefins, polystyrene, expanded polystyrene, high impact polystyrene, polyacrylonitrile, acrylonitrile-butadiene-styrene copolymer, polyester, polyamide (nylon 6, nylon 66, etc.), polyvinyl chloride, polyurethane, polycarbonate, polymethyl methacrylate, polytetrafluoroethylene, polyvinylidene fluoride, polyformaldehyde, polyether ether ketone, polyethylether, polyimide, polyetherimide, phenolic resin, urea resin, melamine formaldehyde resin, cellulose acetate, starch, chitin, gelatin, polylactic acid, polyhydroxyalkanoate, polycaprolactone, poly(DL-lactide-co-glycolide), polypropylene carbonate, poly(cyclohexene carbonate) and the like. Common plastics such as polyvinyl chloride, polypropylene, polyethylene, polystyrene, acrylonitrile-butadiene-styrene copolymer and the like and biodegradable plastics such as polylactic acid, polyhydroxyalkanoate, polycaprolactone, poly(DL-lactide-co-glycolide), polypropylene carbonate, poly(cyclohexene carbonate) and the like are preferred in the present invention.

The properties of the electron beam curable coating are detected in the present application, and the hardness, the wear resistance and the weather resistance and the like of the coating after curing can be detected with standard methods. The hardness measurement of a paint film can refer to ASTM D3363-74, in which a panel bearing coating is placed on a fixed horizontal surface, and a pencil is pushed forward for 10 mm at 45° from the coating at a speed of 5~10 cm/sec to observe whether the surface of the sample is scratched with naked eyes. According to the order of the pencil hardness, tests are conducted step by step from hard to soft until the tip of the pencil does not scratch the coating surface at all. The test pencil dedicated for pencil hardness can be 1H to 9H, the greater the value, the higher the hardness.

The affinity of a paint film with a substrate can refer to the cross cut test for films rating methodology of GB/T 9286-1998. 6 parallel cutting lines (the spacing is determined by the thickness of the coating and the hardness of the substrate, ranging from 1 to 3 mm) are cut vertically and horizontally perpendicularly crossing on a prepared specified test board with a cutting tool. A transparent tape is used to attach the place where the coating is cut off and the tape is torn out evenly. The cutting surface is checked with a 4x magnifier. Grade 0 indicates the best adhesion, and the cutting edge being completely smooth without one grid shedding; Grade 1 indicates a little coating shedding at the intersection of the incision, but the effect on the cross cutting area cannot be greater than 5%; Grade 2 or above fails to meet the requirements.

The wear resistance is measured using a Taber abrasion machine according to ASTM 4060. A test sample has a diameter of 10 cm. The grinding wheel model is Calibrase cs-10 with a load weight of 1 kg and a wear cycle of 2000. The weight of the test sample before and after wear is recorded and the weight loss is expressed in milligrams.

Weather resistance is measured by an accelerated aging test chamber QUV. The UVA-340 lamp of the QUV tester can provide the best solar simulated spectrum with a critical short wavelength ranging from 365 nm to the solar cutoff wavelength 295 nm. The maximum irradiation intensity at 340 nm is 0.68 W/cm$^2$, and the test temperature is 50°C, with the condition of 8 hours of light irradiation and then 4 hours of condensation. The whole test lasts for 1920 hours (80 days). The color change of the surface of the sample after the test is represented by the CIE L\*a\*b\*color space, wherein the L\* value represents the brightness of the color, the a\* value represents the green to red value of the color, and the b\* value represents the blue to yellow value of the color. The chromatic aberration is represented by a equation

$$\Delta E^* = \sqrt{(L_1^* - L_2^*)^2 + (a_1^* - a_2^*)^2 + (b_1^* - b_2^*)^2}.$$

In order to further understand the present invention, the preparation method of the electron beam curable paint and coating provided by the present invention will be described below in detail in combination with the examples, and the scope of the present invention is not limited to the following examples.

Nexsil 12 is a dispersion solution of silicon dioxide in water with a concentration of 30%, a particle size of 12 nm and a pH of 9.3, which is produced by NyacolNano Technologies, Inc.

NanoArc®Al-2255 is a dispersion solution of 20 nm aluminum oxide in water with a concentration of 30%, which is produced by Nanophase Technologies.

VK-T32 is a dispersion solution of anatase titanium dioxide in water, which is produced by Hangzhou Wanjing New Material Co., Ltd. and has a concentration of 20% and a particle size of 10 nm.

NanoBYK-3840 is a dispersion solution of zinc oxide in water, which is produced by Altana Company and has a zinc oxide content of 40% and a particle size of 20 nm.

Organosilane γ-(methyl)acryloyloxypropyltriethoxysilane, vinyltriethoxysilane and 3-chloropropyltriethoxysilane are all obtained from Gelest.

Polyfunctional monomers pentaerythritol triacrylate (PETA) and 1,6-hexanediol diacrylate (HDDA) are obtained from Sartomer.

Acrylate prepolymers DR-U011, 6150-100 and 6195-100 aliphatic urethane acrylates are purchased from Taiwan Changxing Materials Industry Co., Ltd.

Polyvinyl chloride and polypropylene sheet are produced by Foshan Tianan Plastic Co., Ltd.

Example 1

100 g of Nexsil 12 (containing 30% silicon dioxide, 12 nm) was added to 100 g of ethanol, and the pH was adjusted to 3~4 with hydrochloric acid. Then, 60 g of pentaerythritol triacrylate (PETA) was added, and finally 15 g of γ-(methyl) acryloyloxypropyltriethoxysilane was added. The mixed solution was heated to 60°C and stirred for 6 hours while keeping the temperature constant. The solvents ethanol and water were removed under vacuum using a rotary evaporator at a temperature not more than 60°C to obtain a viscous transparent dispersion solution of silicon dioxide in PETA.

Example 2

200 g of Nexsil 12 (containing 30% silicon dioxide, 12 nm) was added to 200 g of ethanol, and the pH was adjusted to 3~4 with hydrochloric acid. Then, 120 g of pentaerythritol triacrylate (PETA) was added, and finally 15 g of γ-(methyl) acryloyloxypropyltriethoxysilane and 15 g of vinyltriethoxysilane were added. The mixed solution was heated to 60°C and stirred for 6 hours while keeping the temperature constant. The solvents ethanol and water were removed under vacuum using a rotary evaporator at a temperature not more than 60°C to obtain a viscous transparent dispersion solution of silicon dioxide in PETA.

Example 3

200 g of Nexsil 12 (containing 30% silicon dioxide, 12 nm) was added to 200 g of ethanol, and the pH was adjusted to 3-4 with hydrochloric acid. Then, 120 g of pentaerythritol triacrylate (PETA) was added, and finally 15 g of γ-(methyl) acryloyloxypropyltriethoxysilane and 15 g of 3-chloropropyltriethoxysilane were added. The mixed solution was heated to 60°C and stirred for 6 hours while keeping the temperature constant. The solvents ethanol and water were removed under vacuum using a rotary evaporator at a temperature of not more than 60°C to obtain a viscous transparent dispersion solution of silicon dioxide in PETA.

Example 4

200 g Al-2255 (containing 30% aluminum oxide, 20 nm) was added to 400 g of ethanol. Then, 120 g of pentaerythritol triacrylate (PETA) was added, and finally 15 g of γ-(methyl) acryloyloxypropyltriethoxysilane and 15 g of 3-chloropropyltriethoxysilane were added. The mixed solution was heated to 60°C and stirred for 6 hours while keeping the temperature constant. The solvents ethanol and water were removed under vacuum using a rotary evaporator at a temperature of not more than 60°C. A viscous transparent dispersion solution of aluminum oxide in PETA was obtained.

Example 5

300 g of VK-T32 (containing 20% anatase titanium dioxide, 10 nm) was added to 600 g of ethanol, and the pH was adjusted to 3-4 with hydrochloric acid. Then, 120 g of pentaerythritol triacrylate (PETA) was added, and finally 15 g of γ-(methyl) acryloyloxypropyltriethoxysilane and 15 g of 3-chloropropyltriethoxysilane were added. The mixed solution was heated to 60°C and stirred for 6 hours while keeping the temperature constant. The solvents ethanol and water were removed under vacuum using a rotary evaporator at a temperature of not more than 60°C to obtain a viscous semitransparent dispersion solution of titanium dioxide in PETA.

Example 6

150 g NanoBYK-3840 (containing 40% zinc oxide, 20 nm) was added to 150 g of water and 600 g of ethanol, the pH was adjusted to 3-4 with hydrochloric acid. Then, 120 g of pentaerythritol triacrylate (PETA) was added, and finally 15 g of γ-(methyl) acryloyloxypropyltriethoxysilane and 15 g of 3-chloropropyltriethoxysilane were added. The mixed solution was heated to 60°C and stirred for 6 hours while keeping the temperature constant. The solvents ethanol and water were removed under vacuum using a rotary evaporator at a temperature of not more than 60°C to obtain a viscous semitransparent dispersion solution of zinc oxide in PETA.

Example 7

200 g of Nexsil 12 (containing 30% silicon dioxide, 12 nm) was added to 200 g of ethanol, and the pH was adjusted to 3~4 with hydrochloric acid. Then, 120 g of pentaerythritol triacrylate (PETA) was added, and finally 7.5 g of γ-(methyl) acryloyloxypropyltriethoxysilane and 22.5 g of 3-yltriethoxysilane were added. The mixed solution was heated to 60°C and stirred for 6 hours while keeping the temperature constant. The solvents ethanol and water were removed under vacuum using a rotary evaporator at a temperature of not more than 60°C to obtain a viscous transparent dispersion solution of silicon dioxide in PETA.

Example 8

200 g of Nexsil 12 (containing 30% silicon dioxide, 12 nm) was added to 200 g of ethanol, and the pH was adjusted to 3~4 with hydrochloric acid. Then, 120 g of pentaerythritol triacrylate (PETA) was added, and finally 30 g of 3-chloropropyltriethoxysilane was added. The mixed solution was heated to 60°C and stirred for 6 hours while keeping the temperature constant. The solvents ethanol and water were removed under vacuum using a rotary evaporator at a temperature of not more than 60°C to obtain a viscous transparent dispersion solution of silicon dioxide in PETA.

Example 9

200 g of Al-2255 (containing 30% aluminum oxide, 20 nm) was added to 400 g of ethanol. Then, 120 g of pentaerythritol triacrylate (PETA) was added, and finally 30 g of 3-chloropropyltriethoxysilane was added. The mixed solution was heated to 60°C and stirred for 6 hours while keeping the temperature constant. The solvents ethanol and water were removed under vacuum using a rotary evaporator at a temperature of not more than 60°C to obtain a viscous transparent dispersion solution of aluminum oxide in PETA.

Example 10

300 g of VK-T32 (containing 20% anatase titanium dioxide, 10 nm) was added to 600 g of ethanol, and the pH was adjusted to 3-4 with hydrochloric acid. Then, 120 g of pentaerythritol triacrylate (PETA) was added, and finally 30 g of 3-chloropropyltriethoxysilane was added. The mixed solution was heated to 60°C and stirred for 6 hours while keeping the temperature constant. The solvents ethanol and water were removed under vacuum using a rotary evaporator at a temperature of not more than 60°C to obtain a viscous semitransparent dispersion solution of titanium dioxide in PETA.

Example 11

150 g NanoBYK-3840 (containing 40% zinc oxide, 20 nm) was added to 150 g of water and 600 g of ethanol, and the pH was adjusted to 3-4 with hydrochloric acid. Then, 120 g of pentaerythritol triacrylate (PETA) was added, and finally 30 g of 3-chloropropyltriethoxysilane was added. The mixed solution was heated to 60°C and stirred for 6 hours while keeping the temperature constant. The solvents ethanol and water were removed under vacuum using a rotary evaporator at a temperature of not more than 60°C to obtain a viscous semitransparent dispersion solution of zinc oxide in PETA.

Example 12

In this example, a urethane acrylate prepolymer was dissolved in 1,6-hexanediol diacrylate according to the formula of Table 1. Then, an appropriate amount of a dispersion solution of silicon dioxide monomer was added. Finally, an appropriate amount of a leveling agent TEGO® RAD 2500 and an antifoaming agent TEGO® Airex 900 were added, and the total amount of the leveling agent and the antifoaming agent is 1%. The resulting paint was coated on an untreated polyvinyl chloride or corona treated polypropylene sheet by a roll coating method to form a coating of about 10 microns. The coating was cured in an electron beam irradiation chamber under nitrogen protection with a radiation voltage of 150 KV and an irradiation dose of 40 KGy. The adhesive force of the coating to the sheet is grade 0 to 1. The addition of silicon dioxide does not affect the transparency of the coating, but can significantly improve the hardness of the coating.

Table 1 Data table of the effect of the dispersion solution of silicon dioxide on hardness

| Group | Silicon dioxide Example 1/g | HDDA/g | Prepolymer/g | Prepolymer | Pencil hardness |
|---|---|---|---|---|---|
| 1-1 | 0 | 50 | 50 | DR-U011 | 1H |
| 1-2 | 10 | 40 | 50 | DR-U011 | 2H |
| 1-3 | 20 | 30 | 50 | DR-U011 | 2H |
| 1-4 | 30 | 20 | 50 | DR-U011 | 3H |
| 1-5 | 0 | 50 | 50 | 6150-100 | 2H |
| 1-6 | 10 | 40 | 50 | 6150-100 | 3H |
| 1-7 | 20 | 30 | 50 | 6150-100 | 4H |

(continued)

| Group | Silicon dioxide Example 1/g | HDDA/g | Prepolymer/g | Prepolymer | Pencil hardness |
|---|---|---|---|---|---|
| 1-8 | 30 | 20 | 50 | 6150-100 | 4H |
| 1-9 | 0 | 50 | 50 | 6195-100 | 3H |
| 1-10 | 10 | 40 | 50 | 6195-100 | 4H |
| 1-11 | 20 | 30 | 50 | 6195-100 | 5H |
| 1-12 | 30 | 20 | 50 | 6195-100 | 6H |

Example 13

In this example, a urethane acrylate prepolymer 6195-100 was dissolved in 1,6-hexanediol diacrylate according to the formula of Table 2. Then, an appropriate amount of a dispersion solution of silicon dioxide monomer was added. Finally, an appropriate amount of a leveling agent TEGO® RAD 2500 and an antifoaming agent TEGO® Airex 900 were added, and the total amount of the leveling agent and the antifoaming agent is 1%. The resulting paint was coated on an untreated polyvinyl chloride or corona treated polypropylene sheet by a roll coating method to form a coating of about 10 microns. The coating was cured in an electron beam irradiation chamber under nitrogen protection at a radiation voltage of 150 KV and the irradiation dose is the minimum dose required for the coating to achieve 5H. The adhesive force of the coating to the sheet is grade 0 to 1.

Table 2 Effect of silane for surface treatment of silicon dioxide on the dose of electron beam

| Group | Silicon dioxide | Dispersion solution of silicon dioxide/g | HDDA/g | Prepolymer/g | Dose (KGy) | Pencil hardness |
|---|---|---|---|---|---|---|
| 2-1 | Example 1 | 30 | 30 | 40 | 40 | 5H |
| 2-2 | Example 2 | 30 | 30 | 40 | 50 | 5H |
| 2-3 | Example 3 | 30 | 30 | 40 | 25 | 5H |
| 2-4 | Example 7 | 30 | 30 | 40 | 25 | 4H |
| 2-5 | Example 8 | 30 | 30 | 40 | 25 | 3H |

Example 14

In this example, a urethane acrylate prepolymer 6195-100 was dissolved in 1,6-hexanediol diacrylate according to the formulation of Table 3. Then, the dispersion solution of silicon dioxide monomer of example 3 and the aluminum oxide of example 4 were added. Finally, an appropriate amount of a leveling agent TEGO® RAD 2500 and an antifoaming agent TEGO® Airex 900 were added, and the total amount of the leveling agent and the antifoaming agent is 1%. The resulting paint was coated on an untreated polyvinyl chloride or corona treated polypropylene sheet by a roll coating method to form a coating of about 10 microns. The coating was cured in an electron beam irradiation chamber under nitrogen protection with a radiation voltage of 150 KV and an irradiation dose of 25 KGy. The adhesive force of the coating to the sheet is grade 0 to 1.

Table 3 Data table of the effect of aluminum oxide on the hardness of the coating

| Example | Dispersion solution of silicon dioxide/g | Dispersion solution of aluminum oxide/g | HDDA/g | Prepolymer/g | Pencil hardness | Wear resistance/mg |
|---|---|---|---|---|---|---|
| 3-1 | 30 | 0 | 30 | 40 | 5H | 21 |
| 3-2 | 30 | 2 | 28 | 40 | 6H | 8 |
| 3-3 | 30 | 5 | 25 | 40 | 7H | 4 |
| 3-4 | 30 | 10 | 20 | 40 | 7H | 3 |

Example 15

In this example, a urethane acrylate prepolymer 6195-100 was dissolved in 1,6-hexanediol diacrylate according to the formula of Table 4. Then, the dispersion solution of silicon dioxide monomer synthesized in example 8, the dispersion solution of aluminum oxide synthesized in example 9, and the dispersion solution of titanium dioxide or zinc oxide of example 10 or 11 were added. Finally, an appropriate amount of aleveling agent TEGO® RAD 2500 and an antifoaming agent TEGO® Airex 900 were added, and the total amount of the leveling agent and the antifoaming agent is 1%. The resulting paint was coated on an untreated polyvinyl chloride or corona treated polypropylene sheet by a roll coating method to form a coating of about 10 microns. The coating was cured in an electron beam irradiation chamber under nitrogen protection with a radiation voltage of 150 KV and an irradiation dose of 25 KGy. The adhesive force of the coating to the sheet is grade 0 to 1. The addition of titanium dioxide or zinc oxide does not affect the irradiation dose.

Table 4 Data table of transparent wear resistant electron beam curable coating and weather resistance thereof

| Example | Dispersion solution of silicon dioxide/g | Dispersion solution of aluminum oxide/g | Dispersion solution of titanium dioxide/g | Dispersion solution of zinc oxide/g | HDDA/g | Prepolymer/g | Pencil hardness | Wear resistance/mg | Weather resistance/ $\Delta E$ |
|---|---|---|---|---|---|---|---|---|---|
| 4-1 | 30 | 5 | 0 | | 25 | 40 | 7H | 4 | 9 |
| 4-2 | 30 | 5 | 5 | | 20 | 40 | 7H | 3 | 5 |
| 4-3 | 30 | 5 | 10 | | 15 | 40 | 8H | 2.5 | 2 |
| 4-5 | 30 | 5 | | 5 | 20 | 40 | 7H | 3.5 | 5 |
| 4-6 | 30 | 5 | | 10 | 15 | 40 | 8H | 3 | 2 |
| PVC | | | | | | | | 122 | 30 |
| PP | | | | | | | | 70 | 15 |

Example 16

A urethane acrylate prepolymer 6195-100 was dissolved in 1,6-hexanediol diacrylate according to the formula of Table 5. Then, the dispersion solution of silicon dioxide monomer synthesized in example 8 or the dispersion solution of aluminum oxide synthesized in example 9, and the dispersion solution of titanium dioxide synthesized in example 10 or the dispersion solution of zinc oxide of example 11 were added. Finally, an appropriate amount of a leveling agent TEGO® RAD 2500 and an antifoaming agent TEGO® Airex 900 were added, and the total amount of the leveling agent and the antifoaming agent is 1%. The resulting paint was coated on an untreated polyvinyl chloride or corona treated polypropylene sheet by a roll coating method to form a coating of about 20 microns. The coating was cured in an electron beam irradiation chamber under nitrogen protection with a radiation voltage of 150 KV and an irradiation dose of 25 KGy. The adhesive force of the coating to the sheet is grade 0 to 1. The addition of titanium dioxide or zinc oxide does not affect the irradiation dose.

Table 5 Data table of transparent wear resistant electron beam curable coating and weather resistance thereof

| Example | Dispersion solution of silicon dioxide/g | Dispersion solution of aluminum oxide/g | Dispersion solution of titanium dioxide/g | Dispersion solution of zinc oxide/g | HDDA/g | Prepolymer/g | Pencil hardness | Wear resistance/mg | Weather resistance /ΔE |
|---|---|---|---|---|---|---|---|---|---|
| 5-1 | 15 | 0 | 5 | 0 | 20 | 60 | 4H | 30 | 10 |
| 5-2 | 0 | 15 | 0 | 5 | 20 | 60 | 5H | 5 | 7 |
| 5-3 | 40 | 0 | 0 | 5 | 5 | 50 | 6H | 15 | 6 |
| 5-4 | 0 | 40 | 10 | 0 | 20 | 30 | 8H | 3 | 3 |
| 5-5 | 50 | 0 | 0 | 5 | 10 | 35 | 7H | 10 | 5 |

The description of the above examples is only for helping to understand the method of the invention and its core idea.

**Claims**

1.  An electron beam curable paint, comprising:

|  |  |
|---|---|
| a dispersion solution of an inorganic nanomaterial | 5~50 parts by weight; |
| a dispersion solution of an inorganic ultraviolet nano-absorbent | 1~10 parts by weight; |
| a polyfunctional monomer | 2~30 parts by weight; |
| an acrylate prepolymer | 10~80 parts by weight; |

wherein the dispersion solution of the inorganic nanomaterial is prepared by the following steps:

A) mixing a solution of the inorganic nanomaterial with an organic solvent to obtain a mixed solution, adjusting the pH of the mixed solution;
B) reacting the solution obtained in step A), an acrylate monomer with a silane coupling agent to obtain the dispersion solution of the inorganic nanomaterial; and
the dispersion solution of an inorganic ultraviolet absorbent is prepared by the following steps:

A) mixing a solution of the inorganic ultraviolet nano-absorbent with an organic solvent to obtain a mixed solution, adjusting the pH of the mixed solution;
B) reacting the solution obtained in step A), an acrylate monomer with a silane coupling agent to obtain the dispersion solution of an inorganic ultraviolet nano-absorbent;

the inorganic nanomaterial is one or two of silicon dioxide and aluminum oxide; and
the inorganic ultraviolet nano-absorbent is titanium dioxide or zinc oxide.

2.  The electron beam curable paint according to claim 1, **characterized in that** the silane coupling agent is an acrylate-based silane and a haloalkyl silane coupling agent.

3.  The electron beam curable paint according to claim 1, **characterized in that** the silicon dioxide has a particle size of 5~100 nm, and the aluminum oxide has a particle size of 12~100 nm.

4.  The electron beam curable paint according to claim 1, **characterized in that** the content of the dispersion solution of the inorganic nanomaterial is 10~30 parts by weight.

5.  The electron beam curable paint according to claim 1, **characterized in that** the acrylate prepolymer is selected from one or more of aliphatic urethane acrylates, aromatic urethane acrylates, epoxy acrylates, melamine acrylates, polyester acrylates, polyether acrylates, organosilicone acrylates, polybutadiene acrylates, polyacrylate acrylates and acrylate oligomers; and the polyfunctional monomer is a polyfunctional acrylate.

6.  The electron beam curable paint according to claim 1, **characterized in that** the electron beam curable paint further comprises a leveling lubricant, an antifoaming agent, a pigment or a nano antibacterial agent; and the pigment is contained in an amount of 0.1~10 parts by weight.

7.  A preparation method of an electron beam curable coating comprising the electron beam curable paint according to any one of claims 1 to 6, comprising the following steps:

mixing 5~50 parts by weight of a dispersion solution of an inorganic nanomaterial, 1~10 parts by weight of a dispersion solution of an inorganic ultraviolet nano-absorbent, 2~30 parts by weight of a polyfunctional monomer, and 10~80 parts by weight of an acrylic prepolymer to obtain a paint;
coating the paint on a substrate, followed by electron beam curing to obtain an electron beam curable coating;
wherein the preparation method of the dispersion solution of the inorganic nanomaterial comprises the following steps:

A) mixing a solution of the inorganic nanomaterial with an organic solvent to obtain a mixed solution, adjusting the pH of the mixed solution;
B) reacting the solution obtained in step A), an acrylate monomer with a silane coupling agent to obtain the dispersion solution of the inorganic nanomaterial; and

the preparation method of the dispersion solution of the inorganic ultraviolet absorbent comprises the following steps:

A) mixing a solution of the inorganic ultraviolet nano-absorbent with an organic solvent to obtain a mixed solution, adjusting the pH of the mixed solution;
B) reacting the solution obtained in step A), an acrylate monomer with a silane coupling agent to obtain the dispersion solution of the inorganic ultraviolet nano-absorbent;

the inorganic nanomaterial is one or two of silicon dioxide and aluminum oxide;
the inorganic ultraviolet nano-absorbent is titanium dioxide or zinc oxide.

8. The preparation method according to claim 7, **characterized in that** a apparatus for the electron beam curing is a low energy electron beam apparatus; the dose of the electron beam curing is 5~100 kGy, and the rate of the electron beam curing is 100~1000 m/min.

9. The preparation method according to claim 7, **characterized in that** the electron beam curable coating has a thickness of 10~100 $\mu$m.

10. Use of the electron beam curable paint according to any one of claims 1 to 6 or the electron beam curable coating comprising the electron beam curable paint according to any one of claims 1 to 6 prepared by the method according to any one of claims 7 to 9 in automobile interiors or decorative boards.

**Patentansprüche**

1. Elektronenstrahlhärtbare Farbe, umfassend:

eine Dispersionslösung aus einem anorganischen Nanomaterial mit 5~50 Gewichtsteilen;
eine Dispersionslösung aus einem anorganischen Ultraviolett-Nanoabsorbens mit 1~10 Gewichtsteilen;
ein polyfunktionelles Monomer 2~30 Gewichtsteilen;
ein Acrylat-Vorpolymer mit 10~80 Gewichtsteilen;
wobei die Dispersionslösung aus dem anorganischen Nanomaterial durch die folgenden Schritte zubereitet wird:

A) Mischen einer Lösung aus dem anorganischen Nanomaterial mit einem organischen Lösungsmittel, um eine gemischte Lösung zu erhalten, Anpassen des pH der gemischten Lösung;
B) Reagieren der in Schritt A) erhaltenen Lösung, eines Acrylat-Monomers mit einem Silan-Kopplungsmittel, um die Dispersionslösung aus dem anorganischen Nanomaterial zu erhalten; und

die Dispersionslösung aus einem anorganischen Ultraviolett-Absorbens durch die folgenden Schritte zubereitet wird:

A) Mischen einer Lösung aus dem anorganischen Ultraviolett-Nanoabsorbens mit einem organischen Lösungsmittel, um eine gemischte Lösung zu erhalten, Anpassen des pH der gemischten Lösung;
B) Reagieren der in Schritt A) erhaltenen Lösung, eines Acrylat-Monomers mit einem Silan-Kopplungsmittel, um die Dispersionslösung aus einem anorganischen Ultraviolett-Nanoabsorbens zu erhalten;

das anorganische Nanomaterial eines oder zwei von Siliciumdioxid und Aluminiumoxid ist; und
das anorganische Ultraviolett-Nanoabsorbens Titandioxid oder Zinkoxid ist.

2. Elektronenstrahlhärtbare Farbe gemäß Anspruch 1, **dadurch gekennzeichnet, dass** das Silan-Kopplungsmittel ein acrylatbasiertes Silan- und ein Haloalkyl-Silan-Kopplungsmittel ist.

3. Elektronenstrahlhärtbare Farbe gemäß Anspruch 1, **dadurch gekennzeichnet, dass** das Siliciumdioxid eine Teilchengröße von 5~100 nm aufweist und das Aluminiumoxid eine Teilchengröße von 12~100 nm aufweist.

4. Elektronenstrahlhärtbare Farbe gemäß Anspruch 1, **dadurch gekennzeichnet, dass** der Gehalt der Dispersionslösung aus dem anorganischen Nanomaterial 10~30 Gewichtsteile beträgt.

5. Elektronenstrahlhärtbare Farbe gemäß Anspruch 1, **dadurch gekennzeichnet, dass** das Acrylat-Vorpolymer aus einem oder mehreren von aliphatischen Urethanacrylaten, aromatischen Urethanacrylaten, Epoxidacrylaten, Melaminacrylaten, Polyesteracrylaten, Polyetheracrylaten, Organosiliciumacrylaten, Polybutadienacrylaten, Polyacrylatacrylaten und Acrylatoligomeren ausgewählt ist; und das polyfunktionelle Monomer ein polyfunktionelles Acrylat ist.

6. Elektronenstrahlhärtbare Farbe gemäß Anspruch 1, **dadurch gekennzeichnet, dass** die elektronenstrahlhärtbare Farbe ferner ein Nivellierungsgleitmittel, ein Entschäumungsmittel, ein Pigment oder ein antibakterielles Nanomittel umfasst; und das Pigment in einer Menge von 0,1~10 Gewichtsteilen enthalten ist.

7. Zubereitungsverfahren von einer elektronenstrahlhärtbaren Beschichtung, umfassend die elektronenstrahlhärtbare Farbe gemäß einem der Ansprüche 1 bis 6, umfassend die folgenden Schritte:

Mischen von 5~50 Gewichtsteilen von einer Dispersionslösung aus einem anorganischen Nanomaterial, 1~10 Gewichtsteilen von einer Dispersionslösung aus einem anorganischen Ultraviolett-Nanoabsorbens, 2~30 Gewichtsteilen von einem polyfunktionellen Monomer und 10~80 Gewichtsteilen von einem Acryl-Vorpolymer, um eine Farbe zu erhalten;
Beschichten der Farbe auf einem Substrat, gefolgt von Elektronenstrahlhärten, um eine elektronenstrahlhärtbare Beschichtung zu erhalten;
wobei das Zubereitungsverfahren der Dispersionslösung aus dem anorganischen Nanomaterial die folgenden Schritte umfasst:

A) Mischen einer Lösung aus dem anorganischen Nanomaterial mit einem organischen Lösungsmittel, um eine gemischte Lösung zu erhalten, Anpassen des pH der gemischten Lösung;
B) Reagieren der in Schritt A) erhaltenen Lösung, eines Acrylat-Monomers mit einem Silan-Kopplungsmittel, um die Dispersionslösung aus dem anorganischen Nanomaterial zu erhalten; und

das Zubereitungsverfahren der Dispersionslösung aus dem anorganischen Ultraviolett-Absorbens die folgenden Schritte umfasst:

A) Mischen einer Lösung aus dem anorganischen Ultraviolett-Nanoabsorbens mit einem organischen Lösungsmittel, um eine gemischte Lösung zu erhalten, Anpassen des pH der gemischten Lösung;
B) Reagieren der in Schritt A) erhaltenen Lösung, eines Acrylat-Monomers mit einem Silan-Kopplungsmittel, um die Dispersionslösung aus dem anorganischen Ultraviolett-Nanoabsorbens zu erhalten;

das anorganische Nanomaterial eines oder zwei von Siliciumdioxid und Aluminiumoxid ist;
das anorganische Ultraviolett-Nanoabsorbens Titandioxid oder Zinkoxid ist.

8. Zubereitungsverfahren gemäß Anspruch 7, **dadurch gekennzeichnet, dass** eine Vorrichtung für das Elektronenstrahlhärten eine Niedrigenergie-Elektronenstrahlvorrichtung ist; die Dosis für das Elektronenstrahlhärten 5~100 kGy beträgt und die Rate für das Elektronenstrahlhärten 100~1000 m/min beträgt.

9. Zubereitungsverfahren gemäß Anspruch 7, **dadurch gekennzeichnet, dass** die elektronenstrahlhärtbare Beschichtung eine Dicke von 10~100 $\mu$m aufweist.

10. Verwendung der elektronenstrahlhärtbaren Farbe gemäß einem der Ansprüche 1 bis 6 oder der elektronenstrahlhärtbaren Beschichtung, umfassend die elektronenstrahlhärtbare Farbe gemäß einem der Ansprüche 1 bis 6, zubereitet durch das Verfahren gemäß einem der Ansprüche 7 bis 9 in Automobilinnenausstattungen oder Decorplatten.

**Revendications**

1. Peinture durcissable par un faisceau d'électrons, comprenant :

une solution de dispersion d'un nanomatériau inorganique de 5 à 50 parties en poids ;
une solution de dispersion d'un nano-absorbant des ultraviolets inorganique de 1 à 10 parties en poids ;
un monomère polyfonctionnel de 2 à 30 parties en poids ;
un prépolymère d'acrylate de 10 à 80 parties en poids ;
ladite solution de dispersion du nanomatériau inorganique étant préparée par les étapes suivantes :

A) mélange d'une solution du nanomatériau inorganique avec un solvant organique pour obtenir une solution mélangée, réglage du pH de la solution mélangée ;
B) réaction de la solution obtenue à l'étape A), d'un monomère d'acrylate avec un agent de couplage silane pour obtenir la solution de dispersion du nanomatériau inorganique ; et

ladite solution de dispersion d'un absorbant des ultraviolets inorganique étant préparée par les étapes suivantes :

A) mélange d'une solution du nano-absorbant des ultraviolets inorganique avec un solvant organique pour obtenir une solution mélangée, réglage du pH de la solution mélangée ;
B) réaction de la solution obtenue à l'étape A), d'un monomère d'acrylate avec un agent de couplage silane pour obtenir la solution de dispersion d'un nano-absorbant des ultraviolets inorganique ;

ledit nanomatériau inorganique étant le dioxyde de silicium et/ou l'oxyde d'aluminium ;
et ledit nano-absorbant des ultraviolets inorganique étant le dioxyde de titane ou l'oxyde de zinc.

2. Peinture durcissable par un faisceau d'électrons selon la revendication 1, **caractérisée en ce que** l'agent de couplage silane est un silane à base d'acrylate et un agent de couplage halo-alkyle silane.

3. Peinture durcissable par un faisceau d'électrons selon la revendication 1, **caractérisée en ce que** le dioxyde de silicium possède une taille de particule allant de 5 à 100 nm et l'oxyde d'aluminium possède une taille de particule allant de 12 à 100 nm.

4. Peinture durcissable par un faisceau d'électrons selon la revendication 1, **caractérisée en ce que** le teneur en solution de dispersion du nanomatériau inorganique est de 10 à 30 parties en poids.

5. Peinture durcissable par un faisceau d'électrons selon la revendication 1, **caractérisée en ce que** le prépolymère d'acrylate est choisi parmi l'un ou plusieurs d'acrylates d'uréthane aliphatiques, d'acrylates d'uréthane aromatiques, d'acrylates d'époxy, d'acrylates de mélamine, d'acrylates de polyester, d'acrylates de polyéther, d'acrylates d'organo-silicone, d'acrylates de polybutadiène, d'acrylates de polyacrylate et d'acrylate d'oligomères ; et le monomère polyfonctionnel est un acrylate polyfonctionnel.

6. Peinture durcissable par faisceau d'électrons selon la revendication 1, **caractérisée en ce que** la peinture durcissable par faisceau d'électrons comprend en outre un lubrifiant de nivellement, un agent antimousse, un pigment ou un nano agent antibactérien ; et le pigment est contenu en une quantité allant de 0,1 à 10 parties en poids.

7. Procédé de préparation d'un revêtement durcissable par faisceau d'électrons comprenant la peinture durcissable par faisceau d'électrons selon l'une quelconque des revendications 1 à 6, comprenant les étapes suivantes :

mélange de 5 à 50 parties en poids d'une solution de dispersion d'un nanomatériau inorganique, de 1 à 10 parties en poids d'une solution de dispersion d'un nano-absorbant des ultraviolets inorganique, de 2 à 30 parties en poids d'un monomère polyfonctionnel et de 10 à 80 parties en poids d'un prépolymère acrylique pour obtenir une peinture ;
revêtement de la peinture sur un substrat, suivi par le durcissement par un faisceau d'électrons pour obtenir un revêtement durcissable par faisceau d'électrons ;
ledit procédé de préparation de la solution de dispersion du nanomatériau inorganique comprenant les étapes suivantes :

A) mélange d'une solution du nanomatériau inorganique avec un solvant organique pour obtenir une solution mélangée, réglage du pH de la solution mélangée ;
B) réaction de la solution obtenue à l'étape A), d'un monomère d'acrylate avec un agent de couplage silane pour obtenir la solution de dispersion du nanomatériau inorganique ; et

le procédé de préparation de la solution de dispersion de l'absorbant des ultraviolet inorganique comprenant les étapes suivantes :

A) mélange d'une solution du nano-absorbant des ultraviolets inorganique avec un solvant organique pour obtenir une solution mélangée, réglage du pH de la solution mélangée ;
B) réaction de la solution obtenue à l'étape A), d'un monomère d'acrylate avec un agent de couplage silane pour obtenir la solution de dispersion du nano-absorbant des ultraviolets inorganique ;

ledit nanomatériau inorganique étant le dioxyde de silicium et/ou l'oxyde d'aluminium ;
ledit nano-absorbant des ultraviolets inorganique étant le dioxyde de titane ou l'oxyde de zinc.

8. Procédé de préparation selon la revendication 7, **caractérisé en ce qu'**un appareil destiné au durcissement par un faisceau d'électrons est un appareil à faisceau d'électrons à faible énergie ; la dose de faisceau d'électrons durcissant est de 5 à 100 kGy, et la vitesse de faisceau d'électrons durcissant est de 100 à 1000 m/min.

9. Procédé de préparation selon la revendication 7, **caractérisé en ce que** le revêtement durcissable par un faisceau d'électrons possède une épaisseur allant de 10 à 100 $\mu$m.

10. Utilisation de la peinture durcissable par un faisceau d'électrons selon l'une quelconque des revendications 1 à 6 ou du revêtement durcissable par un faisceau d'électrons comprenant la peinture durcissable par un faisceau d'électrons selon l'une quelconque des revendications 1 à 6 préparée par le procédé selon l'une quelconque des revendications 7 à 9 dans les intérieurs d'automobiles ou les panneaux décoratifs.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 1709965 A, LI, YANQING
- CN 1421500 A
- JP S6344966 A
- CN 103009756 A
- CN 102408765 A